# EUROPÄISCHE PATENTSCHRIFT

(11) **EP 3 555 937 B1**
(45) Veröffentlichungstag und Bekanntmachung des Hinweises auf die Patenterteilung: **03.03.2021**
(21) Anmeldenummer: 17797643.8
(22) Anmeldetag: 14.11.2017
(51) Int. Cl.: H01M 2/36, H01G 9/055, H01M 10/04, H01G 9/035, H01G 11/58, H01G 13/04, H01M 2/38

(54) **VERFAHREN UND SYSTEM ZUR HERSTELLUNG EINER BATTERIEZELLE**
METHOD AND SYSTEM FOR PRODUCING A BATTERY CELL
PROCÉDÉ ET SYSTÈME DE FABRICATION D'UN ÉLÉMENT DE BATTERIE

(30) Priorität: 15.12.2016 DE 102016225173
(43) Veröffentlichungstag der Anmeldung: 23.10.2019
(73) Patentinhaber: Robert Bosch GmbH, 70442 Stuttgart (DE)
(72) Erfinder: REIMANN, Patrick, 96052 Bamberg (DE); BUTZIN, Michael, 71292 Friolzheim (DE)
(86) Internationale Anmeldenummer: PCT/EP2017/079145
(87) Internationale Veröffentlichungsnummer: WO 2018/108410

(56) Entgegenhaltungen:
- EP-A1- 0 756 342
- JP-A- H 087 879
- JP-B2- H 061 692

## Beschreibung

### Feld der Erfindung

Die vorliegende Erfindung bezieht sich auf ein Verfahren und ein System zur Herstellung einer Batteriezelle gemäß dem Oberbegriff der unabhängigen Patentansprüche.

### Stand der Technik

Die US 2013/0065111 A1 zeigt eine Vorrichtung und ein Verfahren zur verbesserten Verteilung von Elektrolyt in einer Sekundärbatterie. Dabei wird die Sekundärbatterie oszilliert und um ihre Mittelachse rotiert.

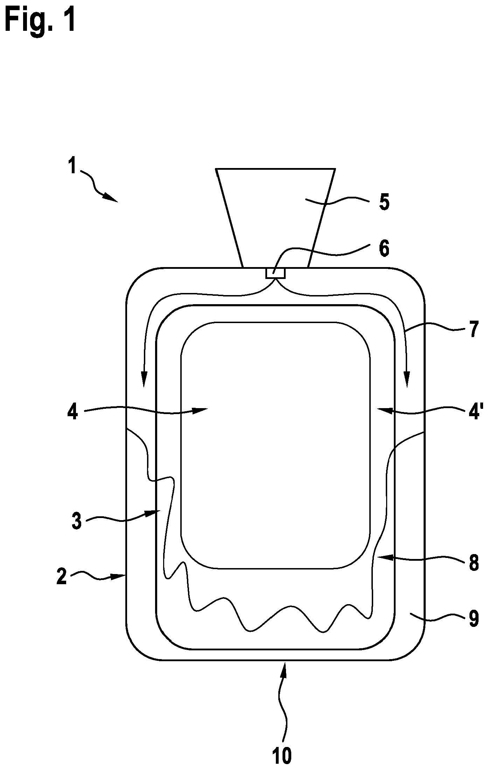

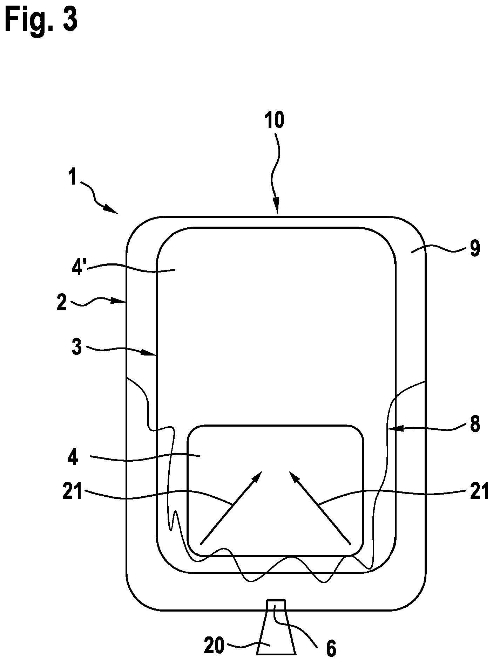

In der US 2013/0244095 A1 ist ein Entgasungsverfahren für eine Sekundärbatterie mittels Zentrifugalkraft gezeigt. JPH06 1692 B2 bezieht sich auf ein Verfahren zur Befüllung einer Batteriezelle (5) mit einem Elektrolyten, wobei die Batteriezelle (5) um eine Drehachse (8) rotiert wird und der Elektrolyt mittels einer durch die Rotation erzeugenden Zentrifugalkraft in die Batteriezelle eingeführt wird (vgl. fig.3). EP 0 756 342 A1 zeigt eine Vorrichtung zur Befüllung einer Batterie mit einem Elektrolyten auf, wobei die Vorrichtung einen Hauptkörper (230) und ein Aufnahmegerät (210) mit zwei Batteriezellengehäusen (60) aufweist. Hier wird die Vorrichtung derart bedient, dass die zwei Batteriezellengehäuse (60) um eine erste Drehachse rotiert werden. JP H08 7879 A offenbart eine Vorrichtung zur Befüllung einer Batterie mit einem Elektrolyten. Die Vorrichtung wird dabei derart bedient, dass zumindest eine Batterie (B) um eine Drehachse (1) rotiert wird (vgl. fig. 1 und 3).

Batteriesysteme finden sowohl in stationären Anwendungen, wie Windkraftanlagen oder Solarenergiesystemen, als auch in Kraftfahrzeugen, wie Hybridfahrzeuge oder Elektrofahrzeuge, oder in Elektronikgeräten, wie Laptops oder Mobiltelefonen, Anwendung.

### Offenbarung der Erfindung

Die Erfindung geht aus von einem Verfahren zur Herstellung einer Batteriezelle gemäß dem unabhängigen Anspruch 1, wobei die Batteriezelle eine Elektrodenanordnung und ein Gehäuse das eine Öffnung, die sich am höchsten Punkt des Gehäuses befindet, aufweist, aufweisend die zeitlich aufeinanderfolgenden Verfahrensschritte:
- wobei die Batteriezelle mittels der Öffnung mit einem Elektrolyt befüllt wird,
- wobei in einem ersten Drehschritt die Batteriezelle um eine Drehachse mehrmals um mehr als 360° rotiert wird, dadurch gekennzeichnet dass, in einem zweiten Drehschritt die Batteriezelle im Vergleich zum Verfahrensschritt der Befüllung mit Elektrolyt um 160° bis 200° gedreht und anschließend in dieser Position gelagert wird.

Der Kern der Erfindung besteht darin, dass der Elektrolyt in das Gehäuse eingebracht wird und zur Benetzung der Elektrodenanordnung mit dem Elektrolyt die Batteriezelle rotiert wird.

Hintergrund der Erfindung ist, dass durch die Rotation eine Zentrifugalkraft auf den Elektrolyt wirkt. Diese Zentrifugalkraft drückt den Elektrolyt zu einem Bodenabschnitt des Gehäuses. Kapillarkräfte bewirken, dass der Elektrolyt in die Elektrodenanordnung eindringt und diese benetzt.

Erfindungsgemäß wird also eine verbesserte Benetzung der Elektrodenanordnung mit Elektrolyt bewirkt im Vergleich zu einer Batteriezelle, die nicht rotiert wird.

Vorteilhafterweise wird dabei kein Druck auf das Gehäuse ausgeübt, der das Gehäuse verformen könnte. Dadurch ist das Gehäuse dünner und leichter ausführbar, als bei einer Batteriezelle in die der Elektrolyt mittels Druck eingebracht wird.

Weitere vorteilhafte Ausführungsformen der vorliegenden Erfindung sind Gegenstand der Unteransprüche.

Erfindungsgemäß wird in einem zweiten Drehschritt die Batteriezelle im Vergleich zum Verfahrensschritt der Befüllung mit Elektrolyt um 160° bis 200°, insbesondere 180°, gedreht und anschließend in dieser Position gelagert. Von Vorteil ist dabei, dass der Elektrolyt aufgrund der Gravitationskraft, die in entgegengesetzter Richtung wie bei der Befüllung wirkt, in entgegengesetzter Richtung wie bei der Befüllung strömt. Während der Lagerung wirken Kapillarkräfte auf den Elektrolyt, die ein Eindringen des Elektrolyten in die Elektrodenanordnung und deren Benetzung mit Elektrolyt in einem der Öffnung benachbarten Bereich der Elektrodenanordnung bewirken.

Gemäß der Erfindung, strömt bei der Lagerung der Elektrolyt in Gravitationsrichtung zu der Öffnung. Somit vergrößert sich ein benetzter Bereich der Elektrodenanordnung, da der Elektrolyt in entgegengesetzter Richtung wie bei der Befüllung strömt.

Ferner ist es von Vorteil, wenn vor dem zweiten Drehschritt die Öffnung des Gehäuses mit einem Verschlussmittel, insbesondere einem Stopfen oder einem Metallband, flüssigkeitsdicht verschlossen wird, insbesondere lösbar. Dadurch wird verhindert, dass der Elektrolyt während des zweiten Drehschrittes aus dem Gehäuse spritzt und/oder während der Lagerung aus dem Gehäuse fließt.

Vorzugsweise wird nach der Lagerung das Verschlussmittel von dem Gehäuse entfernt und überschüssiger Elektrolyt aus der Batteriezelle abgelassen. Der überschüssige Elektrolyt ist wiederverwendbar für die Herstellung einer weiteren Batteriezelle.

Ferner ist es von Vorteil, wenn anschließend die Batteriezelle versiegelt wird, insbesondere mittels eines Druckausgleichventils. Dadurch wird das Druckausgleichventil erst nach den Drehschritten mit der Batteriezelle verbunden. Ein versehentliches Auslösen des Druckausgleichventils während eines der Drehschritte ist somit vermeidbar. Außerdem weist das Druckausgleichventil bei der Inbetriebnahme keine Vorschädigungen durch den Herstellungsprozess der Batteriezelle auf.

Vorteilhafterweise wird vor dem zweiten Drehschritt weiterer Elektrolyt in die Batteriezelle gefüllt. Somit ist eine gezielte Dosierung des Elektrolyten während des Verfahrens ermöglicht. Die Menge an überschüssigem Elektrolyt ist reduzierbar.

Ferner ist es von Vorteil, wenn im ersten Drehschritt die Öffnung unverschlossen ist. Dadurch ist ein Druckausgleich im Inneren des Gehäuses während des ersten Drehschrittes ermöglicht. Während der Aktivierung der Batteriezelle entstehende Gase können durch die Öffnung austreten, so dass eine Explosion der Batteriezelle verhinderbar ist. Dadurch ist die Batterie kompakt ausführbar, da kein zusätzlicher Raum im Gehäuse für diese Gase vorzusehen ist. Ein zusätzlicher Arbeitsschritt für das Öffnen und Entgasen der Batteriezelle ist einsparbar.

Erfindungsgemäß strömt der Elektrolyt beim Befüllen der Batteriezelle von der Öffnung in Gravitationsrichtung in das Gehäuse. Von Vorteil ist dabei, dass der Elektrolyt bei Normaldruck in das Gehäuse strömt. Somit ist die Druckbelastung des Gehäuses der Batteriezelle gering. Das Gehäuse ist kompakt und leicht ausführbar.

Vorzugsweise ist die Drehachse von der Batteriezelle beabstandet. Dabei ist ein Haltemittel zwischen der Batteriezelle und einer um die Drehachse rotierenden Welle anordenbar zur Verbindung der Batteriezelle mit der Welle. Vorteilhafterweise sind mehrere Batteriezellen gleichzeitig um die Drehachse rotierbar.

Ferner ist es von Vorteil, wenn eine die Öffnung aufweisende Oberfläche des Gehäuses den kürzesten Abstand des Gehäuses zu der Drehachse aufweist. Vorteilhafterweise ist die Öffnung dabei im Drehzentrum der Batteriezelle angeordnet, so dass der Elektrolyt mittels der Zentrifugalkraft von der Öffnung weg bewegt wird. Somit ist ein Austreten von Elektrolyt aus der Batteriezelle vermeidbar.

Vorzugsweise berührt die Oberfläche die Drehachse zumindest teilweise. Somit wird der Elektrolyt mittels der Zentrifugalkraft von der Öffnung weg bewegt. Ein Austreten von Elektrolyt aus der Batteriezelle ist vermeidbar.

Ferner ist es von Vorteil, wenn die Drehachse quer zur Gravitationsrichtung ausgerichtet ist. Somit führt die Batteriezelle während des ersten Drehschritts einen Überschlag um ihre Breitenachse aus. Die Gravitationskraft wirkt zeitweise in die gleiche Richtung wie die Zentrifugalkraft, so dass sich Gravitationskraft und Zentrifugalkraft zeitweise gegenseitig verstärken.

Gemäß einer weiteren vorteilhaften Ausführungsform wird die Batteriezelle während des ersten Drehschritts in einer Querrichtung zu der Drehachse ausgelenkt. Vorteilhafterweise ist die Batteriezelle schwenkbar mit einer um die Drehachse rotierenden Welle verbunden. Wenn die Drehachse parallel zur Gravitationsrichtung ausgerichtet ist, wirkt die Zentrifugalkraft quer zur Gravitationsrichtung und lenkt die Batteriezelle aus. Vorteilhafterweise ist die Batteriezelle im Bereich der Öffnung schwenkbar mit der Welle verbunden, so dass die Batteriezelle im Wesentlichen um die Öffnung herum ausgelenkt wird.

Die Erfindung geht aus von einem System zur Herstellung einer Batteriezelle, insbesondere mittels eines Verfahrens wie zuvor beschrieben beziehungsweise nach einem der auf das Verfahren bezogenen Ansprüche.

Der Kern der Erfindung besteht darin, dass das System eine Batteriezelle und ein Haltemittel aufweist, wobei die Batteriezelle mittels des Haltemittels mit einer drehbar gelagerten Welle eines Drehmotors verbindbar ist.

Hintergrund der Erfindung ist, dass die Batteriezelle in einfacher Art und Weise lösbar mit der drehbar gelagerten Welle verbindbar ist.

Erfindungsgemäß ist mittels einer Drehung, insbesondere um mehr als 360°, ein in der Batteriezelle angeordneter Elektrolyt gleichmäßig in einer Elektrodenanordnung der Batteriezelle verteilbar.

Weitere vorteilhafte Ausführungsformen der vorliegenden Erfindung sind Gegenstand der Unteransprüche.

Ferner ist es von Vorteil, wenn die Batteriezelle ein Gehäuse mit einer umlaufenden Nut aufweist, wobei das Haltemittel eine Ausnehmung aufweist, wobei das Gehäuse und das Haltemittel mittels der Nut und der Ausnehmung verbindbar sind. Vorteilhafterweise sind das Gehäuse und das Haltemittel formschlüssig miteinander verbindbar.

Vorzugsweise ist die Nut stufenartig ausgeführt, wobei sich das Gehäuse zu einer Seitenfläche des Gehäuses hin stufenartig verjüngt, wobei das Haltemittel einen Hohlraum aufweist, in dem die Batteriezelle zumindest teilweise aufgenommen ist. Von Vorteil ist dabei, dass das Haltemittel die Batteriezelle hält und schützt, da das Haltemittel die Batteriezelle zumindest teilweise umgibt.

Vorteilhafterweise weisen die Ausnehmung und die Nut einen identischen Querschnitt auf. Somit sind das Haltemittel und das Gehäuse miteinander steckverbindbar, indem ein stufenartig verjüngter Endbereich Gehäuses in die Ausnehmung in dem Haltemittel eingesteckt wird.

Gemäß einer weiteren vorteilhaften Ausführungsform weist das Gehäuse einen umlaufenden Vorsprung auf, wobei das Haltemittel mittels des Vorsprungs mit dem Gehäuse klipsverbindbar ist, wobei das Haltemittel elastisch verformbar ist. Von Vorteil ist dabei, dass das Haltemittel in Querrichtung zu der während einer Rotation auftretenden Zentrifugalkraft elastisch verformbar ist. Somit ist das Gehäuse sicher und lösbar mit dem Haltemittel verbindbar.

### Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:
- Fig. 1: eine schematische Darstellung einer Batteriezelle 1 in einem ersten Verfahrensschritt eines erfindungsgemäßen Verfahrens;
- Fig. 2: eine schematische Darstellung der Batteriezelle 1 in einem zweiten Verfahrensschritt des erfindungsgemäßen Verfahrens;
- Fig. 3: eine schematische Darstellung der Batteriezelle 1 in einem dritten Verfahrensschritt des erfindungsgemäßen Verfahrens;
- Fig. 4: eine erste Ausführungsform einer Batteriezelle 31;
- Fig. 5: die erste Ausführungsform der Batteriezelle 31, die mit einer ersten Ausführungsform eines Haltemittels 40 verbunden ist,
- Fig. 6 und: eine zweite Ausführungsform einer Batteriezelle 51;
- Fig. 7: die zweite Ausführungsform der Batteriezelle 51, die mit einer zweiten Ausführungsform eines Haltemittels 60 verbunden ist.

### Ausführungsformen der Erfindung

In Fig. 1 ist die Batteriezelle 1 in Schnittansicht dargestellt. Die Batteriezelle 1 weist ein Gehäuse 2 und eine Elektrodenanordnung 3 auf. Die Elektrodenanordnung 3 ist im Inneren des Gehäuses 2 angeordnet. Dabei ist die Elektrodenanordnung 3 zumindest teilweise beabstandet von dem Gehäuse 2 angeordnet, so dass ein erster Raumbereich 9 zwischen dem Gehäuse 2 und der Elektrodenanordnung 3 angeordnet ist. Vorzugsweise umgibt der erste Raumbereich 9 die Elektrodenanordnung 3 vollständig.

Unter einer Batteriezelle wird hierbei beispielsweise eine wiederaufladbare Zelle einer wiederaufladbaren Batterie verstanden, insbesondere eine elektrochemische Batteriezelle. Die Batteriezelle ist als lithiumbasierte Batteriezelle, insbesondere Lithium-Ionen-Batteriezelle, ausführbar. Alternativ ist die Batteriezelle als Lithium-Polymer-Batteriezelle oder Nickel-Metallhydrid-Batteriezelle oder Blei-Säure-Batteriezelle oder Lithium-Luft-Batteriezelle oder Lithium-Schwefel-Batteriezelle ausgeführt.

Das Gehäuse 2 weist eine Öffnung 6 auf. Die Öffnung 6 des Gehäuses 2 ist mit einem Ventil 5 eines Elektrolyttanks verbindbar. Somit ist das Gehäuse 2 mittels der Öffnung 6 und des Ventils 5 mit einem Elektrolyt 7 befüllbar.

In einem ersten Verfahrensschritt des erfindungsgemäßen Verfahrens ist die Batteriezelle 1 in Gravitationsrichtung derart angeordnet, dass die Öffnung 6 des Gehäuses 2 am höchsten Punkt des Gehäuses 2 angeordnet ist. Somit strömt ein Elektrolyt 7, der im ersten Verfahrensschritt durch die Öffnung 6 eingefüllt wird, in Gravitationsrichtung in das Gehäuse 2. Dabei strömt der Elektrolyt 7 entlang des ersten Raumbereichs 9 und benetzt einen an den ersten Raumbereich 9 angrenzenden ersten Abschnitt 4' der Elektrodenanordnung 3. Der Elektrolyt 7 sammelt sich an einem Bodenabschnitt 10 des Gehäuses 2, wobei der Bodenabschnitt 10 der in Gravitationsrichtung am weitesten von der Öffnung 6 beabstandete Abschnitt des Gehäuses 2 ist. Ein Füllstand 8 des Elektrolyten 7 ist dabei an der Wandung des Gehäuses 2 am höchsten und nimmt zum Mittelpunkt des Gehäuses 2 hin ab. Dadurch weist die Elektrodenanordnung 3 einen zweiten Abschnitt 4 auf, der mit weniger Elektrolyt 7 benetzt ist als der erste Abschnitt 4'. Der zweite Abschnitt 4 ist im ersten Verfahrensschritt von dem Bodenabschnitt 10 des Gehäuses 2 weiter beabstandet als von der Öffnung 6.

Unter Gravitationsrichtung wird dabei die Richtung verstanden, in der die Gravitationskraft wirkt.

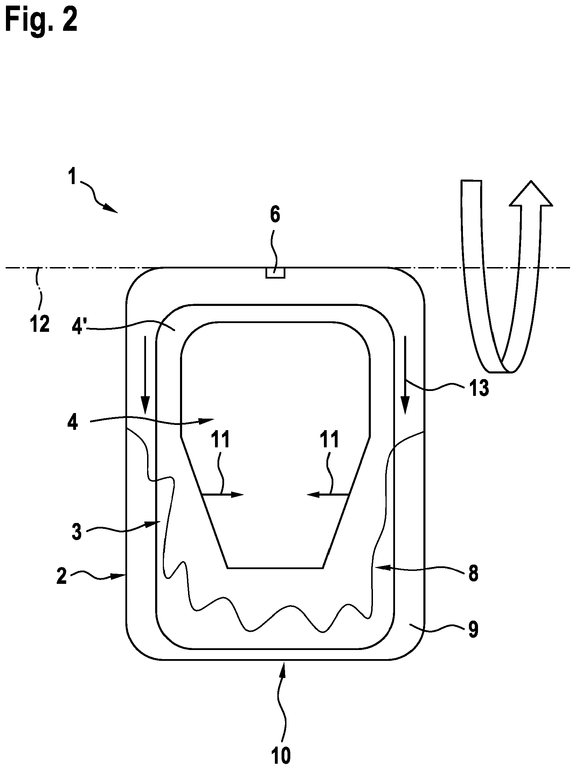

Figur 2 zeigt die Batteriezelle 1, die um eine Drehachse 12 drehbar gelagert angeordnet ist. Die Drehachse 12 ist quer zur Gravitationsrichtung ausgerichtet. Ein Abstand zwischen der Öffnung 6 und der Drehachse 12 ist der kürzeste Abstand zwischen dem Gehäuse 2 und der Drehachse 12. Vorzugsweise erstreckt sich die Öffnung 6 in einer Oberfläche des Gehäuses 2 parallel zur Drehachse 12, insbesondere wobei die Drehachse 12 die Öffnung 6 berührt.

In einem zweiten Verfahrensschritt des erfindungsgemäßen Verfahrens wird die Batteriezelle 1 in einem ersten Drehschritt um die Drehachse 12 rotiert, insbesondere um mehrere Umdrehungen rotiert, insbesondere mit einer festen Frequenz. Dabei wirkt eine Zentrifugalkraft 13 auf den Elektrolyten 7, die quer zur Drehachse 12 ausgerichtet ist. Die Zentrifugalkraft 13 presst den Elektrolyten 7 in dem Gehäuse 2 zum Bodenabschnitt 10 hin. Kapillarkräfte 11 wirken quer zu der Zentrifugalkraft 13 von der Wandung des Gehäuses 2 in die Elektrodenanordnung 3. Dadurch vergrößert sich der erste Abschnitt 4' der Elektrodenanordnung 3 vom Bodenabschnitt 10 aus in zu der Zentrifugalkraft 13 entgegengesetzter Richtung. Der zweite Abschnitt 4 der Elektrodenanordnung 3 verkleinert sich, wobei ein Schwerpunkt des zweiten Abschnitts 4 sich zur Öffnung 6 hin verlagert. Vorzugsweise ist die Batteriezelle 1 während des ersten Drehschritts unverschlossen.

Vorzugsweise wird nach dem zweiten Verfahrensschritt die Batteriezelle 1 erneut mit dem Ventil 5 verbunden und mit weiterem Elektrolyt 7 befüllt.

In Fig. 3 ist die Batteriezelle 1 gezeigt, deren Öffnung 6 mittels eines Verschlussmittels 20, insbesondere eines lösbaren Verschlussmittels, vorzugsweise eines Stopfens oder eines Metallbandes, verschlossen wurde und die in einem dritten Verfahrensschritt in einem zweiten Drehschritt um 160° bis 200°, vorzugsweise 180°, insbesondere kopfüber, gedreht und anschließend gelagert wird. Nach dem zweiten Drehschritt ist der Bodenabschnitt 10 der in Gravitationsrichtung höchste Bereich des Gehäuses. Die Gravitationskraft ist also vom Bodenabschnitt 10 zur Öffnung 6 hin ausgerichtet. Dadurch strömt der Elektrolyt 7 zur Öffnung 6 hin. Kapillarkräfte 21 wirken entgegen der Gravitationskraft. Die Elektrodenanordnung 3 wird von der Öffnung 6 aus zum Bodenabschnitt 10 hin mit Elektrolyt 7 benetzt. Somit vergrößert sich der erste Abschnitt 4' der Elektrodenanordnung 3.

Vorzugsweise wird das Verschlussmittel 20 nach dem dritten Verfahrensschritt entfernt und überschüssiges Elektrolyt 7 aus der Batteriezelle 1 abgelassen. Anschließend wird die Batteriezelle 1 versiegelt, insbesondere mittels eines Druckausgleichventils.

In einem weiteren nicht dargestellten Ausführungsbeispiel ist die Batteriezelle schwenkbar mit einer um die Drehachse drehbaren Welle verbunden. Die Drehachse der drehbaren Welle ist parallel zur Gravitationsrichtung ausgerichtet. Während des ersten Drehschritts wird die Batteriezelle von der Zentrifugalkraft quer zur Gravitationsrichtung ausgelenkt.

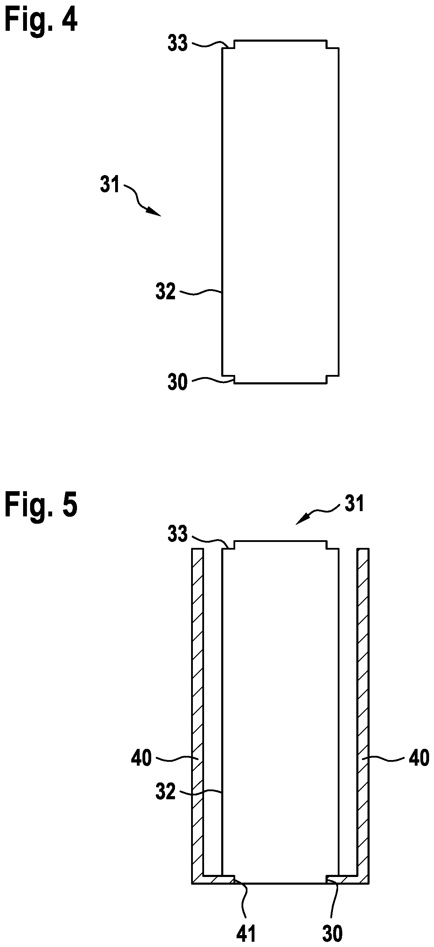

Figur 4 zeigt ein erstes Ausführungsbeispiel einer Batteriezelle 31 eines erfindungsgemäßen Systems zur Herstellung einer Batteriezelle. Das erste Ausführungsbeispiel der Batteriezelle 31 weist ein Gehäuse 32 auf. Das Gehäuse 32 ist im Wesentlichen zylindrisch oder quaderförmig ausgeführt und weist zumindest eine in Umfangsrichtung umlaufende Nut (30, 33) auf. Dabei ist die Nut (30, 33) an einem Endbereich des Gehäuses 32 angeordnet. Vorzugsweise weist das Gehäuse 32 zwei Nuten (30, 33) auf, die an zwei einander gegenüberliegenden Endbereichen des Gehäuses 32 angeordnet sind.

Vorzugsweise ist die jeweilige Nut (30, 33) als Stufe in dem Gehäuse 32 ausgeführt. Dabei verjüngt sich der Durchmesser beziehungsweise eine Seitenlänge des Gehäuses 32 stufenartig zum Ende des Gehäuses 32 hin.

In Fig. 5 ist ein erstes Ausführungsbeispiel eines Haltemittels 40 des erfindungsgemäßen Systems zur Herstellung einer Batteriezelle gezeigt. Das Haltemittel 40 ist als Hohlzylinder oder Hohlquader ausgeführt und weist an einer Seitenfläche eine Ausnehmung 41 auf. Dabei ist die Ausnehmung 41 vorteilhafterweise derart dimensioniert, dass das Gehäuse 32 der Batteriezelle 31 bis zur Stufe der Nut (30, 33) in die Ausnehmung 41 einführbar ist. Somit ist das Gehäuse 32 formschlüssig verbindbar mit dem Haltemittel 40.

Eine der Ausnehmung 41 gegenüberliegende Seitenfläche des Haltemittels 40 ist offen ausgeführt. Durch diese Seitenfläche des Haltemittels 40 ist die Batteriezelle 31 in das Haltemittel 40 einführbar.

Mittels des Haltemittels 40 ist die Batteriezelle 31 verbindbar mit einer drehbar gelagerten Welle eines Drehmotors. Dabei ist die Drehachse der Welle von dem Schwerpunkt der Batteriezelle 31 beabstandet angeordnet, insbesondere von der Batteriezelle 31 beabstandet angeordnet. Alternativ berührt die Drehachse eine Seitenfläche des Gehäuses 32.

Vorteilhafterweise sind zwei oder mehr Batteriezellen 31 mit der Welle verbindbar, wobei die Drehachse in einer Querrichtung zur Drehachse zwischen den Batteriezellen 31 angeordnet ist.

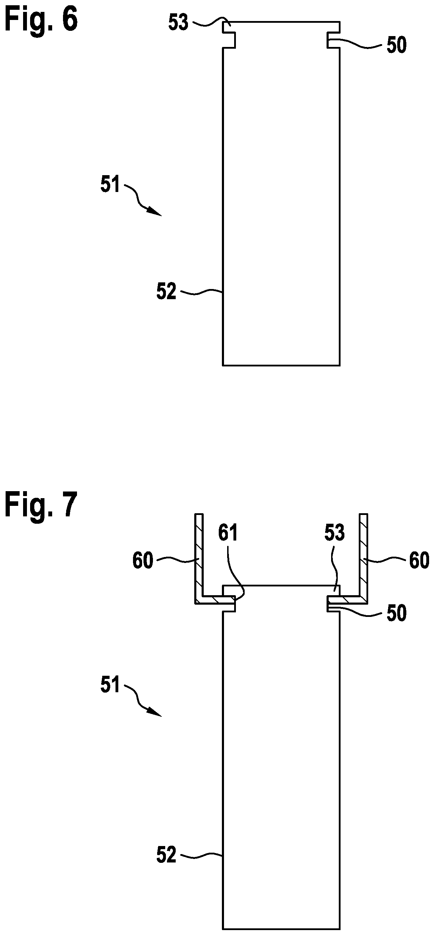

Figur 6 zeigt ein zweites Ausführungsbeispiel einer Batteriezelle 51 eines erfindungsgemäßen Systems zur Herstellung einer Batteriezelle. Das zweite Ausführungsbeispiel der Batteriezelle 51 weist ein Gehäuse 52 auf. Das Gehäuse 52 ist im Wesentlichen zylindrisch oder quaderförmig ausgeführt und weist eine in Umfangsrichtung umlaufende Nut 50 auf. Dabei ist die Nut 50 an einem Endbereich des Gehäuses 52 angeordnet. Dabei ist die Nut 50 beabstandet von einer Seitenfläche des Endbereichs des Gehäuses 52 angeordnet. Der Abstand zwischen der Nut 50 und der Seitenfläche ist kleiner als die kleinste Seitenlänge des Gehäuses 52. Zwischen der Nut 50 und der Seitenfläche des Gehäuses ist ein Vorsprung 53 angeordnet.

In Fig. 7 ist ein zweites Ausführungsbeispiel eines Haltemittels 60 des erfindungsgemäßen Systems zur Herstellung einer Batteriezelle gezeigt. Das Haltemittel 60 ist als Hohlzylinder oder Hohlquader ausgeführt und weist an einer Seitenfläche eine Ausnehmung 61 auf. Dabei ist die Ausnehmung 61 vorteilhafterweise derart dimensioniert, dass das Gehäuse 32 der Batteriezelle 51 mit der Nut 50 in die Ausnehmung 61 einführbar ist. Somit ist das Gehäuse 52 formschlüssig verbindbar mit dem Haltemittel 60.

Vorzugsweise ist das Haltemittel 60 elastisch verformbar ausgeführt, so dass das Gehäuse 52 einklipsbar ist in das Haltemittel 60. Dabei wird das Haltemittel 60 elastisch verformt, um es über den Vorsprung 53 zu führen, und klipst dann in die Nut 50 ein.

Mittels des Haltemittels 60 ist die Batteriezelle 51 verbindbar mit einer drehbar gelagerten Welle eines Drehmotors. Dabei ist die Drehachse der Welle von dem Schwerpunkt der Batteriezelle 51 beabstandet angeordnet, insbesondere von der Batteriezelle 51 beabstandet angeordnet. Alternativ berührt die Drehachse eine Seitenfläche des Gehäuses 52.

Vorteilhafterweise sind zwei oder mehr Batteriezellen 51 mit der Welle verbindbar, wobei die Drehachse in einer Querrichtung zur Drehachse zwischen den Batteriezellen 51 angeordnet ist.

## Patentansprüche

1. Verfahren zur Herstellung einer Batteriezelle (1), wobei die Batteriezelle (1) eine Elektrodenanordnung (3) und ein Gehäuse (2) das eine Öffnung (6), die sich am höchsten Punkt des Gehäuses (2) befindet, aufweist,
aufweisend die zeitlich aufeinanderfolgenden Verfahrensschritte:
- wobei die Batteriezelle (1) mittels der Öffnung mit einem Elektrolyt (7) befüllt wird,
- wobei in einem ersten Drehschritt die Batteriezelle (1) um eine Drehachse (12, die quer zur Gravitationsrichtung ausgerichtet ist, mehrmals um mehr als 360° rotiert wird wobei eine Zentrifugalkraft auf den Elektrolyten wirkt;
- **dadurch gekennzeichnet dass**, in einem zweiten Drehschritt die Batteriezelle im Vergleich zum Verfahrensschritt der Befüllung mit Elektrolyt um 160° bis 200° gedreht und anschließend in dieser Position gelagert wird.

2. Verfahren nach Anspruch 1,
**dadurch gekennzeichnet, dass**
vor dem zweiten Drehschritt die Öffnung (6) des Gehäuses (2) mit einem Verschlussmittel (20), insbesondere einem Stopfen oder einem Metallband, flüssigkeitsdicht verschlossen wird, insbesondere lösbar.

3. Verfahren nach Anspruch 2,
**dadurch gekennzeichnet, dass**
nach der Lagerung das Verschlussmittel (20) von dem Gehäuse (2) entfernt und überschüssiges Elektrolyt (7) aus der Batteriezelle (1) abgelassen wird, insbesondere wobei anschließend die Batteriezelle (1) versiegelt wird, insbesondere mittels eines Druckausgleichventils.

4. Verfahren nach einem der vorhergehenden Ansprüche,
**dadurch gekennzeichnet, dass**
vor dem zweiten Drehschritt weiterer Elektrolyt (7) in die Batteriezelle gefüllt wird.

5. Verfahren nach einem der vorhergehenden Ansprüche,
**dadurch gekennzeichnet, dass**
im ersten Drehschritt die Öffnung (6) unverschlossen ist.

6. Verfahren nach einem der vorhergehenden Ansprüche,
**dadurch gekennzeichnet, dass**
beim Befüllen der Batteriezelle (1) der Elektrolyt (7) von der Öffnung (6) in Gravitationsrichtung in das Gehäuse (2) strömt.

7. Verfahren nach einem der vorhergehenden Ansprüche,
**dadurch gekennzeichnet, dass**
die Drehachse (12) von der Batteriezelle (1) beabstandet ist.

8. Verfahren nach einem der vorhergehenden Ansprüche,
**dadurch gekennzeichnet, dass**
eine die Öffnung (6) aufweisende Oberfläche des Gehäuses (2) den kürzesten Abstand des Gehäuses (2) zu der Drehachse (12) aufweist.

9. Verfahren nach Anspruch 8,
**dadurch gekennzeichnet, dass**
die Oberfläche die Drehachse (12) zumindest teilweise berührt.

10. Verfahren nach einem der vorhergehenden Ansprüche,
**dadurch gekennzeichnet, dass**
die Drehachse (12) quer zur Gravitationsrichtung ausgerichtet ist.

11. Verfahren nach einem der Ansprüche 1 bis 10,
**dadurch gekennzeichnet, dass**
die Batteriezelle (1) während des ersten Drehschritts in einer Querrichtung zu der Drehachse (12) ausgelenkt wird.

## Claims

1. Method for producing a battery cell (1), wherein the battery cell (1) has an electrode arrangement (3) and a housing (2) which has an opening (6) which is arranged at the highest point of the housing (2),
comprising the chronologically successive method steps:
- wherein the battery cell (1) is filled with an electrolyte (7) by means of the opening,
- wherein, in a first rotation step, the battery cell (1) is rotated about an axis of rotation (12) which is oriented transversely to the gravitational direction several times by more than 360°, wherein a centrifugal force acts on the electrolyte;
- **characterized in that**, in a second rotation step, the battery cell, by contrast with the method step of filling with electrolyte, is rotated by 160° to 200° and subsequently mounted in this position.

2. Method according to Claim 1,
**characterized in that**
before the second rotation step, the opening (6) in the housing (2) is closed in a liquid-tight manner by a closure means (20), in particular a plug or a metal strip, in particular in a removable manner.

3. Method according to Claim 2,
**characterized in that**
after the mounting, the closure means (20) is removed from the housing (2), and excess electrolyte (7) is released from the battery cell (1), in particular, the battery cell (1) subsequently being sealed, in particular by means of a pressure relief valve.

4. Method according to any of the preceding claims,
**characterized in that**
before the second rotation step, additional electrolyte (7) is filled into the battery cell.

5. Method according to any of the preceding claims,
**characterized in that**
in the first rotation step, the opening (6) is unsealed.

6. Method according to any of the preceding claims,
**characterized in that**
during the filling of the battery cell (1), the electrolyte (7) flows from the opening (6) in the gravitational direction into the housing (2).

7. Method according to any of the preceding claims,
**characterized in that**
the axis of rotation (12) is at a distance from the battery cell (1).

8. Method according to any of the preceding claims,
**characterized in that**
a surface of the housing (2) having the opening (6) is at the shortest distance of the housing (2) from the axis of rotation (12).

9. Method according to Claim 8,
**characterized in that**
the surface is in contact with the axis of rotation (12) at least in part.

10. Method according to any of the preceding claims,
**characterized in that**
the axis of rotation (12) is oriented transversely to the gravitational direction.

11. Method according to any of Claims 1 to 10,
**characterized in that**
during the first rotation step, the battery cell (1) is deflected in a transverse direction to the axis of rotation (12).

## Revendications

1. Procédé de production d'un élément de batterie (1), l'élément de batterie (1) comportant un ensemble d'électrodes (3) et un boîtier (2) qui comporte une ouverture (6) qui est ménagée au point le plus élevé du boîtier (2),
le procédé comportant les étapes de procédé chronologiques suivantes :
- l'élément de batterie (1) est rempli d'un électrolyte (7) par l'ouverture,
- dans une première étape de rotation, l'élément de batterie (1) est mis en rotation plusieurs fois de plus de 360° sur un axe de rotation (12) qui est orienté transversalement au sens de gravitation, une force centrifuge agissant sur l'électrolyte ;
- **caractérisé en ce que**, dans une deuxième étape de rotation, l'élément de batterie est mis en rotation de 160° à 200° par rapport à l'étape de procédé de remplissage d'électrolyte puis stocké dans cette position.

2. Procédé selon la revendication 1,
**caractérisé en ce que**
avant la deuxième étape de rotation, l'ouverture (6) du boîtier (2) est fermée de manière étanche aux liquides, notamment de manière amovible, avec un moyen de fermeture (20), notamment un bouchon ou une bande métallique.

3. Procédé selon la revendication 2,
**caractérisé en ce que**
après stockage, le moyen de fermeture (20) est retiré du boîtier (2) et l'excès d'électrolyte (7) est évacué de l'élément de batterie (1), en particulier l'élément de batterie (1) étant ensuite scellé, notamment au moyen d'une soupape de compensation de pression.

4. Procédé selon l'une des revendications précédentes,
**caractérisé en ce que**
avant la deuxième étape de rotation, de l'électrolyte supplémentaire (7) est introduit dans l'élément de batterie.

5. Procédé selon l'une des revendications précédentes,
**caractérisé en ce que**
dans la première étape de rotation, l'ouverture (6) n'est pas fermée.

6. Procédé selon l'une des revendications précédentes,
**caractérisé en ce que**
lors du remplissage de l'élément de batterie (1), l'électrolyte (7) s'écoule dans le sens de gravitation de l'ouverture (6) jusque dans le boîtier (2).

7. Procédé selon l'une des revendications précédentes,
**caractérisé en ce que**
l'axe de rotation (12) est distant de l'élément de batterie (1).

8. Procédé selon l'une des revendications précédentes,
**caractérisé en ce que**
une surface du boîtier (2), pourvue de l'ouverture (6), est à la distance la plus courte du boîtier (2) par rapport à l'axe de rotation (12).

9. Procédé selon la revendication 8,
**caractérisé en ce que**
la surface touche au moins partiellement l'axe de rotation (12).

10. Procédé selon l'une des revendications précédentes,
**caractérisé en ce que**
l'axe de rotation (12) est orienté transversalement au sens de gravitation.

11. Procédé selon l'une des revendications 1 à 10,
**caractérisé en ce que**
l'élément de batterie (1) est dévié dans une direction transversale à l'axe de rotation (12) pendant la première étape de rotation.
